# EUROPEAN PATENT SPECIFICATION

(11) **EP 3 493 898 B1**
(45) Date of publication and mention of the grant of the patent: **09.10.2024**
(21) Application number: 17745190.3
(22) Date of filing: 02.08.2017
(51) Int. Cl.: B01J 8/06, B01J 19/00, C10G 2/00

(54) **REACTION UNIT WITH MICROREACTOR**
REAKTIONSANLAGE MIT MIKROREAKTOR
UNITÉ DE RÉACTION AVEC MICRORÉACTEUR

(30) Priority: 04.08.2016 EP 16382388
(43) Date of publication of application: 12.06.2019
(73) Proprietor: Fundación Tecnalia Research & Innovation, 20009 Donostia-San Sebastian, Guipuzcoa (ES)
(72) Inventor: ARTECHE CALVO, Amaya, 48160 Derio (ES); ARAGÓN PUY, Jorge, 48160 Derio (ES); PECIÑA CARRIL, Iñigo, 48160 Derio (ES); PÉREZ GIL, Susana, 48160 Derio (ES); IPIÑAZAR ALONSO, Enrique, 48160 Derio (ES)
(74) Representative: ZBM Patents - Zea, Barlocci & Markvardsen
(86) International application number: PCT/EP2017/069508
(87) International publication number: WO 2018/024764

(56) References cited:
- EP-A2- 1 174 185
- WO-A2-2004/073861
- WO-A2-2014/062359
- US-A1- 2009 221 723
- R K SHAH ET AL: "THE MANUFACTURE OF MICRO CROSS-FLOW HEAT EXCHANGERS BY SELECTIVE LASER MELTING", 410 PROCEEDINGS OF FIFTH INTERNATIONAL CONFERENCE ON ENHANCED, 1 September 2005 (2005-09-01), pages 2005 - 53, XP055086490, Retrieved from the Internet <URL:http://dc.engconfintl.org/cgi/viewcontent.cgi?article=1045&context=heatexchangerfall2005&sei-redir=1&referer=http://scholar.google.de/scholar?q=Selective+Laser+Melting+microchannel&btnG=&hl=de&as_sdt=0%2C5#search=> [retrieved on 20131104]

## Description

The present disclosure relates to reactors for exothermic or endothermic reactions, e.g. exothermic catalytic reactions, for obtaining hydrocarbons when multiphasic reactants are involved.

### BACKGROUND

Hydrocarbons may be indirectly obtained by specific chemical reactions e.g. Fischer-Tropsch (FTS) reaction or Sabatier reaction. FTS is a reaction that transforms hydrogen and carbon monoxide gases into hydrocarbons. Besides, methane is obtained from hydrogen and carbon monoxide and/or carbon dioxide gases by a Sabatier Reaction also known as hydrogenation of carbon dioxide or methanation. Both reactions usually take place between 250 - 450°C. Regarding pressure, FTS normally occurs between 10 - 20 bar, and Sabatier reaction may happen between 10 - 25 bar.

The use of solid catalysts to accelerate these reactions is a common practice.

FTS and Sabatier reactions are highly exothermic i.e. a large amount of heat is released as a consequence of the process. Exothermic reactions take place in adapted reactors that are continuously cooled in order to dissipate the heat released by the reaction. Heat transfer is a key point to get the reaction under controlled conditions and achieve high efficiencies in the reaction.

Current industrial cooling processes show a limited efficiency, and so an isothermal regime is not always reached. In both reactions, the isothermal conditions corresponding to the optimal temperature for the desired products should be assured.

Depending on the operating conditions, the FTS can produce a wide range of olefins, paraffin and oxygenated products (alcohols, aldehydes, acids and ketones). This range of different products is influenced by combinations of variables e.g. temperature, feeding gas composition, pressure, catalyst type and promoters. In this sense, depending on the catalyst and type of process employed, hydrocarbons ranging from methane to higher molecular paraffins and olefins can be obtained. Although differences in the product distribution for different catalysts at similar temperatures and pressures can be observed, in general, the product distribution is primarily driven by the operating temperature: higher temperatures than 300°C shift selectivity towards lower carbon number products and more hydrogenated products.

Concerning to the Sabatier reaction, this is thermodynamically favored at relatively low temperatures and high pressures. The reaction is highly exothermal and the adiabatic temperature rises highly as the reaction progresses. As the temperature increases, the chemical equilibrium of the methane formation process shifts towards the reactants. The reaction reaches an equilibrium state at high temperatures depending on the prevailing pressure and that limits the CO2 conversion. Thus, the greatest challenge involved in exothermic reactions such us methanation is the temperature control. Indeed, the reactor design is closely linked to an efficient heat removal.

Some kinetic problems could happen when the released heat is not properly dissipated due to the high temperatures in the reactor resulting in e.g. catalyst deactivation because of the creation of hot spots in the catalytic bed.

Additionally, when reactors for catalytic reactions are designed, a wide contact surface is sought in order to increase both gas-solid contact and heat transfer. Several reactors configurations are designed in order to improve the multiphasic reactants i.e. more than one state of matter, and some of the most promising are the microreactors. The microreactors or microchannel reactors allow a high contact surface between gas and solid material and dissipate the heat properly.

The conventional manufacturing technique used to make microchannel reactors i.e. stacking different featured layers and then joining them together, implies several phases to construct and to assemble one reactor. Numerous pieces have to be stacked together and could lead assembling problems. The bigger stacks reactors, the more serious problems and more materials required and more overall costs and required time to assemble it appear.
at the same time the gas-solid contact, having reduced the required assembling steps and minimizing the overall costs.

R K Shah et al; "The Manufacture of Micro Cross-Flow Heat Exchangers by Selective Laser Melting"; Proceedings of Fifth International Conference on Enhanced, Compact and Ultra-Compact Heat Exchangers; September 2015 describes use of selective laser melting to fabricate micro cross-flow heat exchangers from 316L Stainless Steel powder.

### SUMMARY

There is provided a reaction unit according to the independent claim. Other aspects of the invention are set forth in the dependent claims.

The use of a plurality of parallel tubes having a narrow internal diameter improves the reaction output. The gas-solid contact between reactants and catalyst is increased and as energy transfer is improved, isothermal conditions are achieved. As a result, an improved output is achieved.

Besides, the use of a body manufactured in a single part provides a compact, secure, flexible and homogeneous reactor. In the present application, the term *body manufactured in a single part* must be understood as a body comprising only one, individual, integral piece. In other words, a body which has not been formed by parts, e.g. tubes, manufactured separately and then joined together e.g. by welding.

According to an example, the reactor could integrate fins attached on the outer surface of the tubes. These fins may connect each tube to other adjacent tubes. The use of fins enhances the energy transfer from or to the reaction.

According to an example, the body of the reactor is built by an additive manufacturing technique. The use of this manufacturing process allows a more flexible design of the reactor than when using other techniques, which leads to save materials and time.

In a preferred example, the additive manufacturing technique is Selective Laser Melting. By using this technique, a reliable reactor having the required accurate dimensions and characteristics is obtained.

In a second aspect, a reaction unit for exothermic or endothermic reactions which comprises a reactor according to any of the disclosed examples and a housing for receiving the reactor and inlets/outlets, is provided. The reaction unit may comprise an inlet for feeding the reactants into the tubes and an outlet for collecting the reaction products. The reaction unit may additionally comprise an inlet and an outlet to enable a thermal fluid to flow inside the housing and around the tubes of the reactor and may also comprise a preheater to regulate the temperature of the reactants before feeding them into the tubes.

In a third aspect, a method for manufacturing a reactor according to any of the disclosed examples is disclosed. Firstly, a metal powder layer is spread onto a substrate. Secondly, the metal powder layer is selectively melted. Previous steps are repeated until the reactor is finished.

### BRIEF DESCRIPTION OF THE DRAWINGS

Non-limiting examples of the present disclosure will be described in the following, with reference to the appended drawings, in which:
Figure 1 schematically illustrates a reactor according to an example;
Figure 2 schematically illustrates in cross-section an array of tubes and fins according to an example;
Figure 3 schematically illustrates a top view of a reactor according to an example;
Figure 4 schematically illustrates a lateral view of a reaction unit according to an example; and

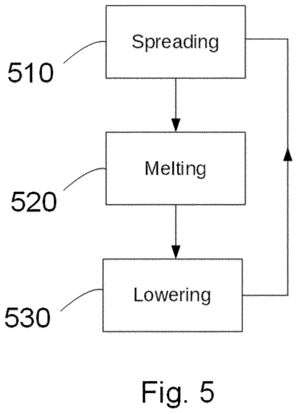

Figure 5 illustrates a flow diagram of a method of manufacturing a reactor.
also fixed by an adhesive or they may be welded to the external element. Any other suitable manner may be used to fix the reactor 100 to an external element.

For example, connector 140 may be used as inlet connector to feed the tubes 110 with reactants, e.g. carbon dioxide and hydrogen in Sabatier reaction, while connector 150 may be used as outlet connector to collect reaction products e.g. methane and water in a Sabatier reaction. Such reactants may be previously heated in a preheater e.g. a coil.

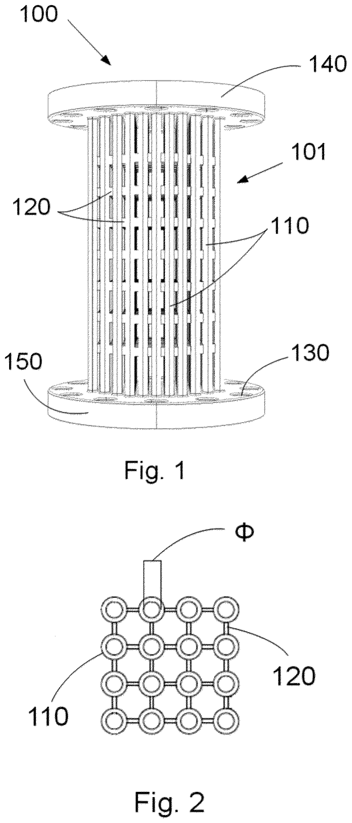

Figure 2 shows in cross-section an array of parallel tubes 110 according to an example. In Figure 2, fins attached on the outer surfaces of the tubes 110 and tubes internal diameters Φ are depicted. According to an example fins length, and so, the distance between adjacent tubes, may be of about 1.25 mm. According to another example, the internal diameter Φ of the tubes 110 may be less than 4 mm, preferably between 1 - 3 mm and more preferably between 1 - 2.2 mm.

This range has been found suitable for containing e.g. catalyst particles, but also for achieving a high gas-solid contact between the reactants and catalyst increasing the efficiency of the reactor 100.

The parallel tubes 110 may contain a catalyst e.g. catalyst particles, to increase the reaction rate. Depending on the reaction, different catalysts may be used, e.g. in case of a Fischer-Tropsch reaction such catalyst particles may be based on Fe or Co, and in case of a Sabatier reaction those particles may be based on Ni or Ru.

Catalyst particles may have a particle size between 0.25 - 0.30 mm and/or a density about 0.55 - 0.65 g/cm³.

When carrying out catalytic reactions, the reactor 100 may comprise a metallic filter (not shown) at the outlet of the tubes 110 to avoid catalyst loss.

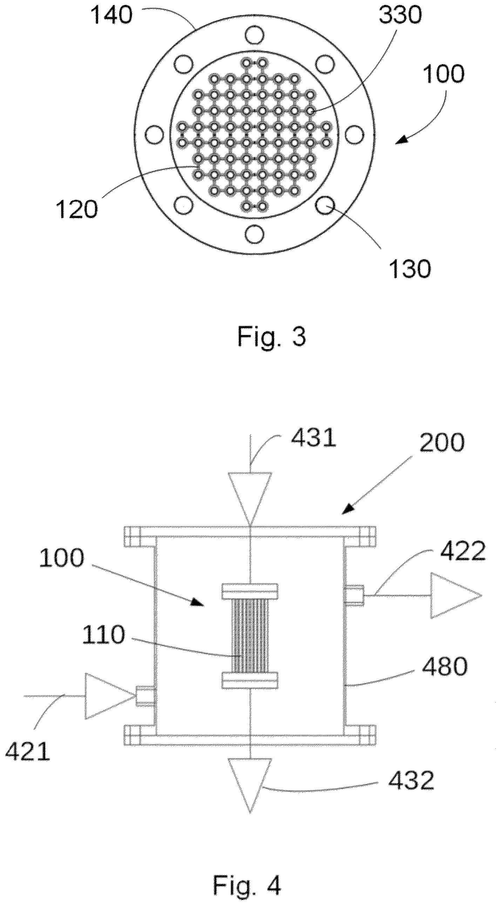

Figure 3 shows a top view of a reactor 100 comprising a connector 140 with holes 130 which may receive screws to fix the reactor 100 to an external element. The reactor 100 shown in Figure 3 may also comprise holes 330, in be used, e.g. in case of a Fischer-Tropsch reaction such catalyst particles may be based on Fe or Co, and in case of a Sabatier reaction those particles may be based on Ni or Ru.

Catalyst particles may have a particle size between 0.25 - 0.30 mm and/or a density about 0.55 - 0.65 g/cm³.

When carrying out catalytic reactions, the reactor 100 may comprise a metallic filter (not shown) at the outlet of the tubes 110 to avoid catalyst loss.

Figure 3 shows a top view of a reactor 100 comprising a connector 140 with holes 130 which may receive screws to fix the reactor 100 to an external element. The reactor 100 shown in Figure 3 may also comprise holes 330, in correspondence with the parallel tubes, which may be used as inlet for reactants in inlet connector 140. Finally, connector 150 (not shown) placed at the opposite end of the parallel tubes may be used as outlet for reaction products.

The reactor module 100 may further be part of an exemplary reaction unit 200 shown in Figure 4. The reactor unit 200 may comprise a housing 480 for receiving at least a reactor module 100 and a plurality of anchoring elements (not shown) to receive e.g. screws, for securing the reaction unit 200. The number of modules 100 may be modified depending on the targeted capacity production rate. The housing 480 should be provided an inlet 431 (indicated by an arrow) for feeding reaction products into the tubes 110 and an outlet 432 (also indicated by an arrow) for collecting reaction products. When more than one single reaction module 100 is implemented, the reaction products may be firstly collected in individual reaction product collectors that may converge in a collective reaction product collector which may be connected to the reaction product outlet 432.

The housing 480 may further comprise a thermal fluid inside the housing (not shown) in which the reactor modules 100, or at least the reactor tubes 110, may be immersed. A thermal fluid may be any fluid e.g. thermal oil, which enables heat transfer and capable of being warmed or cooled depending on the requirements of each case. Therefore, a thermal fluid may be cooled to may be located inside or outside the housing 480. To do so, the reactor unit 200 may comprise an inlet 421 and an outlet 422 (both indicated by an arrow) for the thermal fluid flow. The fluid may flow continuously and, consequently, an isothermal medium e.g. at reaction temperature, which contributes to improve the reaction may be created. A pump (not shown) may be used to maintain the fluid flow at a desired rate e.g. a rate that minimizes the gradient between the thermic fluid and the reactor output gases.

Reaction unit 200 (see Figure 4) may additionally comprise a distribution chamber (not shown) for feeding the tubes 110 with e.g. gaseous reactants, in a homogeneous manner.

In a further example, reaction unit 200 may further comprise thermocouple nozzles (not shown) to connect thermocouples and measure temperature inside the housing 480. Additionally, the reaction unit 200 may further comprise a coil immersed in the thermic fluid so as to put the reactants into the reaction temperature by e.g. warming it.

In an example, the reaction unit 200 shown in Figure 4 may comprise 4 reaction modules, each of them having 388 parallel tubes. However, both the number of reactors and/or the number of parallel tubes may be determined e.g. for a target production. In another example, the reaction unit may comprise 4 reactors, each them comprising 97 parallel tubes.

The number of parallel tubes 110 may depend not only on the reaction and/or its variables but on the gas flow and the catalyst performance. For example, in a reactor where the tubes have an internal diameter of 1.75 mm and a length of 100 mm, and the catalyst density is 0.55 g/cm³, the number of tubes for different reactions and parameters is summarized below:

| Reaction | T (°C) | P (bar) | Q (L/h) | M (g) | N |
|---|---|---|---|---|---|
| FTS | 220-280 | 10-20 | 24 | 2 | 16 |
| FTS | 220-280 | 10-20 | 90-100 | 8 | 64 |
| Sabatier | 280-450 | 5-25 | 200-250 | 6-6.2 | 68 |
| Sabatier | 280-450 | 5-25 | 3100-2900 | 80 | 388 |

e.g. for a target production. In another example, the reaction unit may comprise 4 reactors, each them comprising 97 parallel tubes.

The number of parallel tubes 110 may depend not only on the reaction and/or its variables but on the gas flow and the catalyst performance. For example, in a reactor where the tubes have an internal diameter of 1.75 mm and a length of 100 mm, and the catalyst density is 0.55 g/cm³, the number of tubes for different reactions and parameters is summarized below:

| Reaction | T (°C) | P (bar) | Q (L/h) | M (g) | N |
|---|---|---|---|---|---|
| FTS | 220-280 | 10-20 | 24 | 2 | 16 |
| FTS | 220-280 | 10-20 | 90-100 | 8 | 64 |
| Sabatier | 280-450 | 5-25 | 200-250 | 6-6.2 | 68 |
| Sabatier | 280-450 | 5-25 | 3100-2900 | 80 | 388 |

In the table, T is the reaction temperature range measured in degrees Celsius, P is the gas line pressure measured in bars, Q is the gas flow measured in liters per hour, M is the total catalyst mass used in the reactor measured in grams and N is the number of tubes in the reactor of each example.

Furthermore, the reactor may be designed to have an elevated length to diameter ratio and thus a higher amount of tube surface in contact with a thermal fluid. According to an example, the length of each tube may be 100 - 75 mm and the internal diameter may be 1.75 - 2.20 mm. The wall thickness of the parallel tubes 110 may be e.g. about 0.4 - 0.5 mm, to further improve heat dissipation while maintaining mechanical strength to support the pressures.

The reactor design parameters such as material selections, parallel tubes internal diameter, wall thickness, geometry; the number and distribution of tubes and fins, etc., may be selected according to requirements of each case taking into consideration the reactant media, catalyst particle size, the pressure, temperature, etc.
powder may be e.g. stainless steel or FeCr alloy, and the thickness of each layer may be between 20 - 100 µm. Finally, the additive manufacturing machine, and according to the loaded 2D file, may selectively melt 520 the layer of metal powder. After selectively melting the metal powder layer, the substrate plate may be lowered 530. These steps may be repeated until the reactor is finished and then, the remaining powder may be removed. The finished reactor may further be subjected to finishing operations.

Such manufacturing method allows obtaining a reactor with the required dimensions, suitable for enhancing both gas-solid contact and energy transfer while at the same time improves the output of the reactor and the required thermal stability to provide an effective reaction i.e. as an isothermal environment is achieved. At the same time, the manufactured reactor is compact, stable and homogeneous and it has reliable mechanical properties. Moreover, as the reactor is free from joints, the risk of leaks is avoided.

Although only a number of examples have been disclosed herein, other alternatives, modifications, uses and/or equivalents thereof are possible.

Furthermore, all possible combinations of the described examples are also covered.

## Claims

1. A reaction unit (200) comprising:
- a reactor (100) for multiphasic reactions comprising:
a body (101) manufactured in a single part by Selective Laser Melting, SLM, forming a plurality of parallel tubes (110) containing catalyst particles to increase a reaction rate and intended to contact a reactant that circulates within the tubes (110) during operation of the reactor (100),
an inlet (431) for feeding the reactant into the tubes (110) and an outlet (432) for collecting reaction products,
- a housing (480) for receiving the reactor (100) with an inlet (421) and an outlet (422) for the flow of a thermal fluid inside the housing (480) and around the tubes (110) of the reactor (100), and
- a preheater to regulate a reactant temperature before feeding the reactant into the tubes (110),
wherein an internal diameter of the tubes (110) is 1 - 3 mm.

2. The reactor (100) according to claim 1, further comprising an inlet connector (140) at one end of the plurality of tubes (110) for feeding the reactant, and an outlet connector (150) at the other end of the tubes (110) for the outlet of the products of the reaction.

3. The reactor (100) according to any claims 1 - 2, further comprising fins (120) attached on the outer surfaces of the tubes (110).

4. The reactor (100) according to any of claim 3, wherein the fins (120) extend between each tube (110) and other adjacent tubes (110).

5. The reactor according to any of the preceding claims, wherein the catalyst particles have a particle size of 0.15 - 0.3 mm.

## Patentansprüche

1. Eine Reaktionseinheit (200), umfassend:
- einen Reaktor (100) für Mehrphasenreaktionen, umfassend:
einen Körper (101), der in einem einzigen Teil durch selektives Laserschmelzen, SLM (*selective laser melting*), hergestellt ist und eine Vielzahl von parallelen Rohren (110) bildet, die Katalysatorpartikel enthalten, um eine Reaktionsrate zu erhöhen, und dazu bestimmt ist, in Kontakt mit einem Reaktanten zu kommen, der während des Betriebs des Reaktors (100) in den Rohren (110) zirkuliert,
einen Einlass (431) zum Zuführen des Reaktanten in die Rohre (110) und einen Auslass (432) zum Sammeln von Reaktionsprodukten,
- ein Gehäuse (480) zur Aufnahme des Reaktors (100) mit einem Einlass (421) und einem Auslass (422) für den Fluss eines thermischen Fluids innerhalb des Gehäuses (480) und um die Rohre (110) des Reaktors (100) herum, und
- einen Vorwärmer, um eine Reaktantentemperatur zu regulieren, bevor der Reaktant in die Rohre (110) eingespeist wird,
wobei ein Innendurchmesser der Rohre (110) 1 - 3 mm beträgt.

2. Der Reaktor (100) nach Anspruch 1, ferner umfassend einen Einlassanschluss (140) an einem Ende der Vielzahl von Rohren (110) zum Zuführen des Reaktanten und einen Auslassanschluss (150) am anderen Ende der Rohre (110) für den Auslass der Reaktionsprodukte.

3. Der Reaktor (100) nach einem der Ansprüche 1 bis 2, ferner umfassend Rippen (120), die an den Außenflächen der Rohre (110) befestigt sind.

4. Der Reaktor (100) nach einem von Anspruch 3, wobei sich die Rippen (120) zwischen jedem Rohr (110) und anderen benachbarten Rohren (110) erstrecken.

5. Der Reaktor nach einem der vorhergehenden Ansprüche, wobei die Katalysatorpartikel eine Partikelgröße von 0,15 - 0,3 mm haben.

## Revendications

1. Une unité de réaction (200) comprenant :
- un réacteur (100) pour des réactions multiphasiques comprenant :
un corps (101) fabriqué en une seule pièce par fusion laser sélective, SLM (*selective laser melting*)*,* formant une pluralité de tubes parallèles (110) contenant des particules de catalyseur pour augmenter une vitesse de réaction et destinés à venir en contact avec un réactif qui circule à l'intérieur des tubes (110) pendant le fonctionnement du réacteur (100),
une entrée (431) pour alimenter le réactif dans les tubes (110) et une sortie (432) pour collecter les produits de réaction,
- un logement (480) pour recevoir le réacteur (100) avec une entrée (421) et une sortie (422) pour l'écoulement d'un fluide thermique à l'intérieur du logement (480) et autour des tubes (110) du réacteur (100), et
- un préchauffeur pour réguler une température de réactif avant d'introduire le réactif dans les tubes (110),
dans lequel un diamètre interne des tubes (110) est de 1 à 3 mm.

2. Le réacteur (100) selon la revendication 1, comprenant en outre un connecteur d'entrée (140) à une extrémité de la pluralité de tubes (110) pour alimenter le réactif, et un connecteur de sortie (150) à l'autre extrémité des tubes (110) pour la sortie des produits de la réaction.

3. Le réacteur (100) selon l'une quelconque des revendications 1 à 2, comprenant en outre des ailettes (120) fixées sur les surfaces extérieures des tubes (110).

4. Le réacteur (100) selon l'une quelconque de la revendication 3, dans lequel les ailettes (120) s'étendent entre chaque tube (110) et d'autres tubes adjacents (110).

5. Le réacteur selon l'une quelconque des revendications précédentes, dans lequel les particules de catalyseur ont une taille de particules de 0,15 à 0,3 mm.
